Europäisches Patentamt

**European Patent Office**

**Office européen des brevets**

(11) Veröffentlichungsnummer: **0 313 677 B1**

## EUROPÄISCHE PATENTSCHRIFT

(45) Veröffentlichungstag der Patentschrift: **05.02.92**

(51) Int. Cl.⁵: **B01D 35/14**, B01D 35/30, F16J 13/00

(21) Anmeldenummer: **87115829.1**

(22) Anmeldetag: **28.10.87**

(54) Sicherheitsverschluss für Filtergehäuse.

(43) Veröffentlichungstag der Anmeldung:
**03.05.89 Patentblatt 89/18**

(45) Bekanntmachung des Hinweises auf die Patenterteilung:
**05.02.92 Patentblatt 92/06**

(84) Benannte Vertragsstaaten:
**DE FR GB IT SE**

(56) Entgegenhaltungen:
DE-A- 3 217 371
FR-A- 2 440 516
GB-A- 1 543 070
US-A- 2 792 123

(73) Patentinhaber: **Gebr. Schmid GmbH & Co.
Robert-Bosch-Strasse 34
W-7290 Freudenstadt(DE)**

(72) Erfinder: **Schmid, Dieter C.
Schäferstich 19
W-7290 Freudenstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft einen Sicherheitsverschluß für Filtergehäuse, insbesondere in Druckfilteranlagen, mit einem eine Gehäuseöffnung abdichtenden Deckel, durch die das Filter oder die Filterpatrone in dem Filtergehäuse gewechselt werden kann.

Die Erfindung betrifft insbesondere einen Sicherheitsverschluß für Filtergehäuse, wie sie in Naßprozeß-Maschinen bei der Galvanik, dem Ätzen, Entwickeln und Strippen von Leiterplatten verwendet werden.

Üblicherweise kommen zum Verschließen der Filtergehäuse Deckel mit Schraubverschluß oder von am Filtergehäuse befestigten klappbaren Bügeln gehaltene Deckel zum Einsatz. Eine Abdichtung des Filtergehäuses erfolgt üblicherweise durch O-Ringe, die am Umfang abdichten oder durch plane Dichtungen.

Problematisch sind diese Verschlüsse deshalb, weil der Dekkel während des Betriebes der Filteranlage entfernt werden kann und die Filteranlage sogar in Gang gesetzt werden kann, ohne daß ein Deckel vorhanden ist oder dieser nicht dicht verschlossen ist. Im Betrieb der oben genannten Naßprozeß-Maschinen werden die Filtergehäuse unter Druck mit der zu filtrierenden Flüssigkeit beaufschlagt, wobei dann durch die nicht abgedichtete Gehäuseöffnung schwermetallhaltige, korrosive Flüssigkeiten austreten können.

Aufgabe der Erfindung ist es, einen Verschluß für Filtergehäuse zu schaffen, der einen Betrieb der Filteranlage, das heißt insbesondere ein Beaufschlagen des Filters mit der zu filtrierenden Flüssigkeit unter Druck, nur dann ermöglicht, wenn die Gehäuseöffnung durch einen Deckel sicher verschlossen ist. Außerdem soll ein unsachgemäßes Öffnen des Filtergehäuses, insbesondere wenn dieses noch unter Überdruck steht, verhindert werden.

Diese Aufgabe wird bei einem Verschluß der eingangs beschriebenen Art erfindungsgemäß dadurch gelöst, daß am Dekkel zur Erzeugung eines Freigabesignals für die Filteranlage ein von einer Prüfvorrichtung in der Schließstellung des Deckels detektierbares Geberelement angeordnet ist, daß der Deckel an Führungsnuten oder -bolzen der Gehäuseöffnung angepaßte Führungsnuten bzw. -bolzen aufweist, und daß die Führungsnuten Ausnehmungen aufweisen, in die die Führungsbolzen bei einer Drehung des Deckels aus der Schließstellung heraus bei unter Überdruck stehendem Filtergehäuse einrasten.

Ausführungsformen, bei denen die Führungsnuten am Deckel und die Führungsbolzen an der Gehäuseöffnung angeordnet sind, sind gleichermaßen geeignet wie eine umgekehrte Anordnung.

Insbesondere der durch die Führungsnuten und -bolzen gebildete Schließmechanismus des Filtergehäuses stellt sicher, daß nur ein korrekt aufgesetzter Deckel in die Schließposition gedreht werden und damit das Freigabesignal erzeugen kann. Die durch die Ausnehmungen definierte Raststellung der Führungsbolzen ist zweckmäßigerweise nur bei drucklosem Filtergehäuse überwindbar ist. Damit ist sichergestellt, daß selbst bei ausgeschalteter Filteranlage das Filtergehäuse nur dann geöffnet werden kann, wenn sich der Druck im Filtergehäuse abgebaut hat, so daß auch in abgeschaltetem Zustand der Filteranlage eine Fehlbedienung und damit ein Austreten von der zu filtrierenden Flüssigkeit sicher verhindert wird.

Günstig ist es, wenn die Führungsnuten im Verlauf zunächst einen steileren und dann einen flacher steigenden Teil aufweisen, so daß insbesondere bei den mit O-Ring abgedichteten Deckeln zunächst ein Eintauchen des Dichtrings in einen Dichtraum stattfindet, wonach dann das endgültige Abdichten in dem flacheren Steigungsteil der Führungsnuten erfolgt. Zweckmäßigerweise weisen die Führungsnuten einen steigungsfreien Teil auf, in dessen Verlauf die Schließstellung des Deckels erreicht wird. Die Ausnehmungen, die eine Raststellung für die Führungsbolzen definieren, werden bevorzugt im steigungsfreien Teil der Führungsnuten angeordnet. Der Abstand der Ausnehmungen von der Schließstellung, in der der Signalgeber über die Prüfvorrichtung ein Freigabesignal für die Filteranlage erzeugt, wird günstigerweise so gewählt, daß in der Raststellung der Führungsbolzen der Signalgeber bereits kein Freigabesignal für die Filteranlage mehr erzeugen kann.

Das Geberelement kann beispielsweise ein mechanischer Anschlag sein, der einen Sicherheitsschalter bedient, der einen Betrieb der Filteranlage nur dann erlaubt, wenn das Geberelement mechanisch den Sicherheitsschalter in die Einschaltposition drückt.

Das Geberelement kann jedoch auch als ein Signalgeber für einen berührungslosen Näherungsschalter sein. Die Arbeitsweise des Signalgebers kann dabei insbesondere optisch, magnetisch oder induktiv sein.

An dieser Stelle sei noch darauf hingewiesen, daß die Lösung der Teilaufgabe, nämlich ein Öffnen des unter Überdruck stehenden Filtergehäuses in jedem Betriebszustand der Filteranlage zu verhindern, völlig unabhängig von der Geber / Prüfvorrichtungskombination verwirklicht werden kann und für sich selbst als schutzfähig angesehen wird.

Diese und weitere Vorteile der Erfindung werden im weiteren anhand der Zeichnung noch näher erläutert. Es zeigen im einzelnen:

Figur 1: eine Schnittansicht durch ein Filtergehäuse mit lediglich aufgesetztem Deckel;

Figur 2: Stellung von Führungsbolzen und Führungsnut bei aufgesetztem Deckel entsprechend Figur 1;

Figur 3: eine Schnittansicht durch das Filtergehäuse von Figur 1 mit dem Deckel in Schließstellung;

Figur 4: Stellung von Führungsnut und Führungsbolzen bei geschlossenem Filtergehäuse; entsprechend Figur 3;

Figur 5: Schnittansicht durch das Filtergehäuse entsprechend Figur 1 mit einem sich in Raststellung befindlichen Deckel;

Figur 6: Führungsnut und Führungsbolzen in Raststellung entsprechend Figur 5 und

Figur 7 a-c: Draufsicht auf den Deckel des Führungsgehäuses in der Offen-, Schließ- und Raststellung

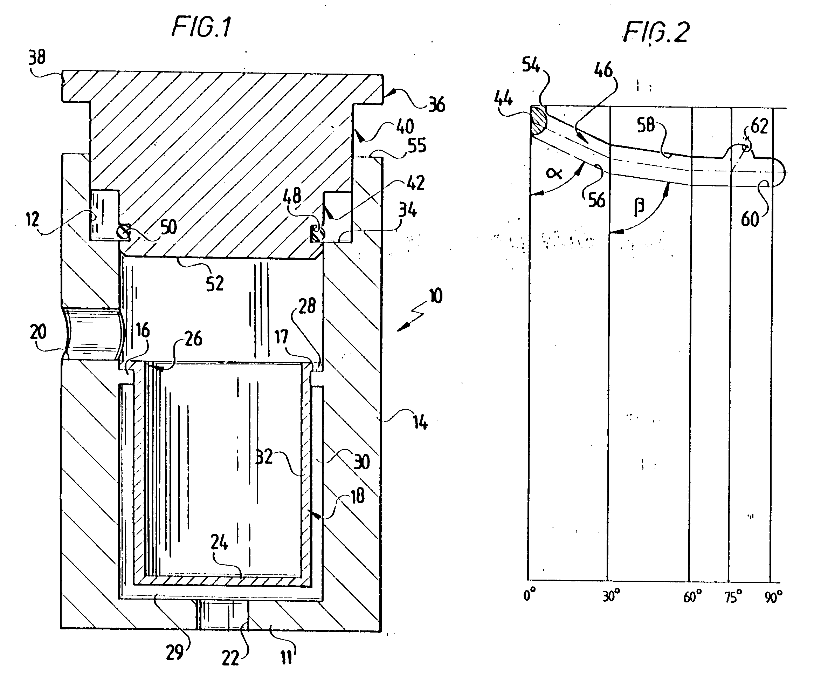

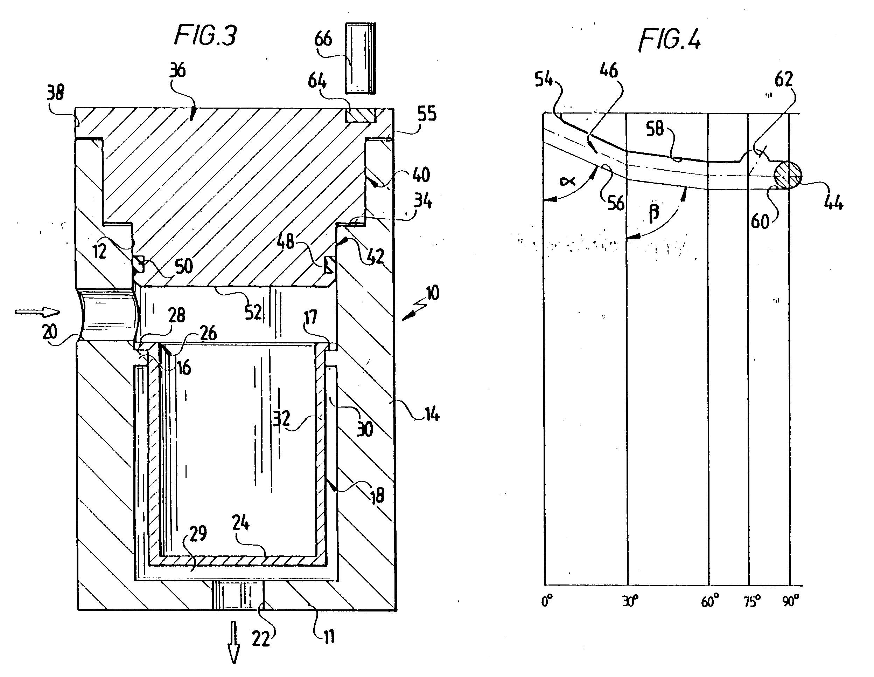

Figur 1 zeigt eine schematische Schnittansicht durch ein hohlzylindrisches Filterhäuse 10 mit einem Boden 11 und einer dem Boden in axialer Richtung gegenüberliegenden Gehäuseöffnung 12. Eine zwischen Boden 11 und Gehäuseöffnung 12 in Umfangsrichtung verlaufende Wandung 14 weist etwa in halber axialer Höhe einen ringsumlaufenden Wulst 16 auf, der eine ringförmige, plane Auflagefläche 17 für ein durch die Gehäuseöffnung 12 einzusetzendes Filter 18 bildet. Die Wandung 14 des Filtergehäuses ist oberhalb des Wulstes 16 und damit benachbart zur Gehäuseöffnung 12 mit einem Einlaß 20 für das zu filtrierende Gut versehen. Im Boden 11 ist mittig eine Auslaßöffnung 22 vorgesehen, durch die das Filtrat abfließen kann.

Das Filter 18 ist als zylindrischer Hohlkörper ausgebildet, der durch einen Filterboden 24 auf der einen Seite verschlossen ist. Das in axialer Richtung gegenüberliegende Ende 26 des Filters ist offen und trägt am äußeren Umfang einen ringsumlaufenden Flansch 28, der bei eingesetztem Filter 18 auf der ringförmigen planen Auflagefläche 17 der Wandung 14 aufliegt. Die Höhe des Filters 18 wird so bemessen, daß zwischen dem Filterboden 24 und dem Boden 11 des Filtergehäuses 10 ein Zwischenraum 29 verbleibt, der in Verbindung mit einem ringförmigen Zwischenraum 30 steht, der von der Wandung 14 des Filtergehäuses 10 und der in Umfangsrichtung verlaufenden Seitenwandung 32 des Filters 18 gebildet wird. In den Zwischenräumen 29 und 30 sammelt sich im Betrieb der Filteranlage das Filtrat, das dann über die Auslaßöffnung 22 das Filtergehäuse 10 verläßt.

Die Wandung 14 des Filtergehäuses 10 weist im innenliegenden Bereich der Gehäuseöffnung 12 einen ringsumlaufenden Rücksprung 34 auf, der, gegebenenfalls mit einem Dichtungsring versehen, einen Sitz für einen Deckel 36 bildet.

Der Deckel 36 ist ein rotationssymmetrischer Körper, der sich aus einer Deckelplatte 38, einem Führungsteil 40 und einem Dichtungsteil 42 zusammensetzt. Der Durchmesser der Deckelplatte 38 ist so gewählt, daß sie das obere Ende des Filtergehäuses 10 abdeckt. Das Führungsteil 40 des Deckels 36 ist in seinem Durchmesser so angepaßt, daß es den von der Gehäuseöffnung 12 oberhalb des Rücksprungs 34 gebildeten Hohlraum im wesentlichen ausfüllt. Das Führungsteil 40 trägt mindestens 2, bevorzugt 3 Führungsbolzen 44, die in Figur 1 nicht dargestellt sind. Diese Führungsbolzen 44 ragen über die Umfangsfläche des Führungsteils 40 hinaus und greifen jeweils in eine Nut 46 ein, die im Bereich der Gehäuseöffnung 12 in der Wandung 14 vorgesehen sind.

Vorzugsweise werden die Führungsbolzen 44 und -nuten 46 in Umfangsrichtung in ungleichen Abständen angeordnet, so daß der Deckel 36 nur in einer bestimmten Stellung auf das Filtergehäuse 10 aufgesetzt werden kann.

Die Führungsbolzen 44 und die Führungsnuten 46 sind in den Figuren 1, 3 und 5 der Einfachheit halber nicht dargestellt; sie sind in einer planen Darstellung der ringförmigen Innenfläche der Gehäuseöffnung 12 in Figuren 2, 4 und 6 dargestellt.

Das Dichtungsteil 42 des Deckels 36 hat gegenüber dem Führugsteil 40 wiederum einen geringeren Durchmesser, wobei die Verringerung des Durchmessers der Verengung des Gehäuseinneren durch den Rücksprung 34 entspricht. Damit kann das Dichtungsteil 42 in den unterhalb des Rücksprungs 34 liegenden Teil des von dem Filterhäuse gebildeten Hohlraums eintauchen. Am unteren Ende des Dichtungsteils 42 ist in Umfangsrichtung eine ringsumlaufende Nut 48 angebracht, die einen O-Ring 50 aufnimmt. Die Tiefe der Nut 48 ist dabei etwas geringer als der Durchmesser des O-Rings 50, so daß dieser beim Einsetzen des Deckels 36 und beim Eintauchen des Dichtungsteils 42 in den unterhalb des Rücksprungs 34 liegenden Bereich des Filtergehäuses so zusammengedrückt wird, daß der zwischen Dichtungsteil 42 und Bodenteil 11 des Filtergehäuses verbleibende Innenraum des Filtergehäuses gegenüber der Gehäuseöffnung 12 abgedichtet wird (siehe Figur 3). Die Höhe des Deckels 36 wird so bemessen, daß sich die Unterseite 52 des Deckels 36 noch oberhalb oder gerade abschließend mit der Öffnung des Einlasses 20 bei dem sich in Schließstellung befindlichen Deckel 36 befindet.

Die Führungsnuten 46 weisen einen zunächst axial verlaufenden Teil 54 auf, der sich bis an die Oberkante 55 der Gehäusewandung 14 erstreckt und ein Einsetzen des Deckels 36 mit den Führungsbolzen 44 erlaubt. In einem anschließenden Teilbereich 56 der Nut 46 verläuft diese in einem Winkel zur Axialrichtung, der vorzugsweise circa 65° beträgt. Danach setzt sich die Führungsnut 46 in einem flacher werdenden Teilbereich 58 fort, dessen Längsachse zur Axialrichtung des Filtergehäuses einen Winkel bildet, der vorzugsweise circa 80° beträgt. Die Führungsnut 46 endet in einem Endbereich 60, dessen Längsrichtung mit der Axialrichtung des Filtergehäuses 10 einen rechten Winkel bildet. Die Teilbereiche 56 und 58 sowie der Endbereich 60 der Führungsnut bilden für die Führungsbolzen 46 jeweils eine etwa gleich lange Führungsstrecke, die jeweils einer Drehung des Deckels 36 um 30° entspricht. Der Endbereich 60 der Führungsnut 46 weist etwa in der Mitte seiner Längsrichtung in Richtung zur Oberkante 55 der Gehäusewandung 14 hin ausgebildete Ausnehmung 62 auf, die für die Führungsbolzen 44 eine Raststellung definieren. Die Ausnehmungen 62 sind dabei vorzugsweise so ausgebildet, daß ihre Tiefe mindestens dem Radius der Führungsbolzen 44 entspricht.

Die Figuren 1, 3 und 5 zeigen den Deckel 36 in verschiedenen Positionen gegenüber dem Filtergehäuse 10. Die daneben abgebildeten Figuren 2, 4 und 6 zeigen dazu jeweils die Stellung der Führungsbolzen 44 in den Führungsnuten 46.

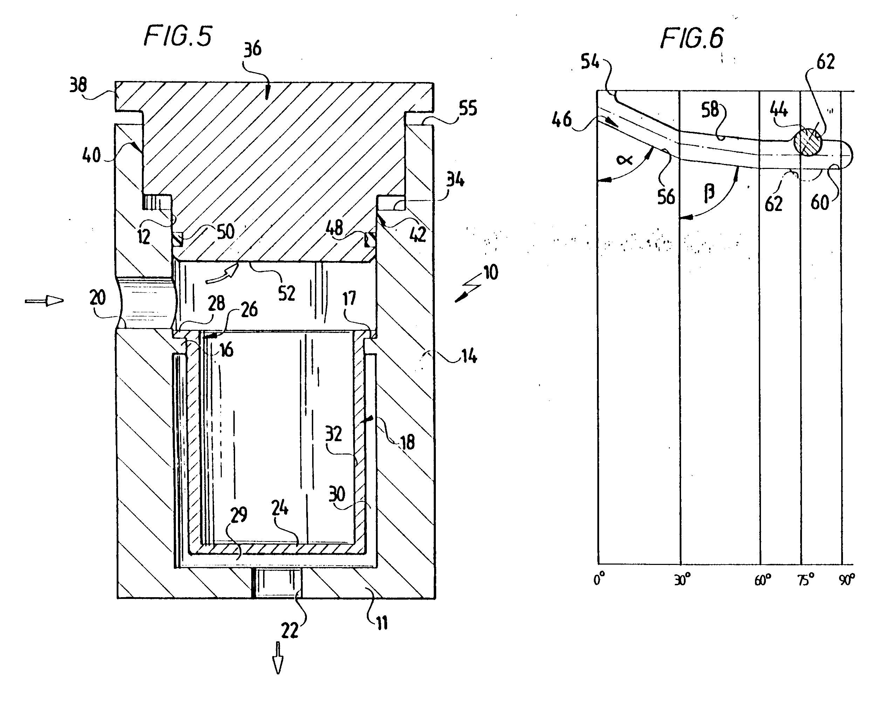

Figur 1 zeigt den Deckel 36, der gerade in das Filtergehäuse 10 eingesetzt wurde, wobei die Führungsbolzen 44 in dem in Axialrichtung verlaufenden Teilbereich der Führungsnut 54 eintauchen. Bei einer nun folgenden Drehbewegung des Deckels um 90° taucht das Dichtungsteil 42 des Deckels 36 zunächst in den Innenraum des Filtergehäuses wegen des etwas steileren Verlaufes des Teilbereichs 56 der Führungsnut 46 schnell ein und sorgt so für einen dichtenden Kontakt des Dichtungsringes 50 mit der inneren Fläche der Seitenwandung 14 unterhalb des Rücksprunges 34. Dies ist bereits nach einer Drehbewegung um 30° der Fall. In dem folgenden Teilbereich 58 der Führungsnut 46 erfolgt nun die endgültige Abdichtung, wobei der Deckel 36 weiter in das Innere des Filtergehäuses 10 hineingedrückt wird. In dem sich daran anschließenden Endbereich 60 der Führungsnut 46 erreicht der Deckel 36 in einer weiteren 30°-Drehung seine endgültige Schließstellung. Diese Schließstellung ist in Figur 3 bezüglich des Deckels 36 im Gehäuse 10 dargestellt, die entsprechende Stellung des Führungsbolzens 44 in der Führungsnut 46 in Figur 4.

Wird versucht, den Deckel 36 aus seiner Schließposition herauszubewegen und zu öffnen, dann verhindern die Ausnehmungen 62 in den Führungsnuten 46 bei einem noch unter Druck stehenden Filtergehäuse 10 das vollständige Öffnen des Filtergehäuses. Da der Dichtungsring 50 immer noch an der inneren Oberfläche der Gehäusewandung 14 angepreßt wird und damit das Filtergehäuse bezüglich der Gehäuseöffnung 12 abdichtet, führt der im Inneren des Filtergehäuses während des Betriebes der Filteranlage aufgebaute Druck dazu, daß der Deckel 36 nach oben gedrückt wird, wodurch die Führungsbolzen 44 in den Ausnehmungen 62 einrasten. Durch das Einrasten der Führungsbolzen 44 in die Ausnehmungen 62 wird eine weitere Drehung des Deckels 36 verhindert, solange das Filtergehäuse noch unter Druck steht. Dies gilt auch bei abgeschalteter Filteranlage. Die Figuren 5 und 6 stellen den Deckel in der Raststellung beziehungsweise den Führungsbolzen 44 eingerastet in der Ausnehmung 62 der Führungsnut 46 dar.

Ein wesentlicher Punkt der Erfindung ist die Anordnung eines Geberelements 64 am Deckel 36 zur Erzeugung eines Freigabesignals für die Filteranlage insgesamt, wobei eine Prüfvorrichtung 66 mit Hilfe des Geberelementes überwacht, ob sich der Deckel 36 in der korrekten Schließstellung befindet.

Von den vielen denkbaren Möglichkeiten für die Prüfvorrichtung 66 und den zugehörigen Geber 64 sei im folgenden lediglich als bevorzugtes Beispiel eine Anordnung beschrieben, bei der der Geber ein Magnet 64 ist und die zugehörige Prüfvorrichtung ein Reed-Relais 66. Die Prüfvorrichtung beziehungsweise das Reed-Relais 66 und der Magnet 64 sind in Figur 3 nur schematisch dargestellt, wobei hier darauf hinzuweisen ist, daß selbstverständlich das Reed-Relais 66 ebenso im oder am Gehäuse 10 angebracht werden kann.

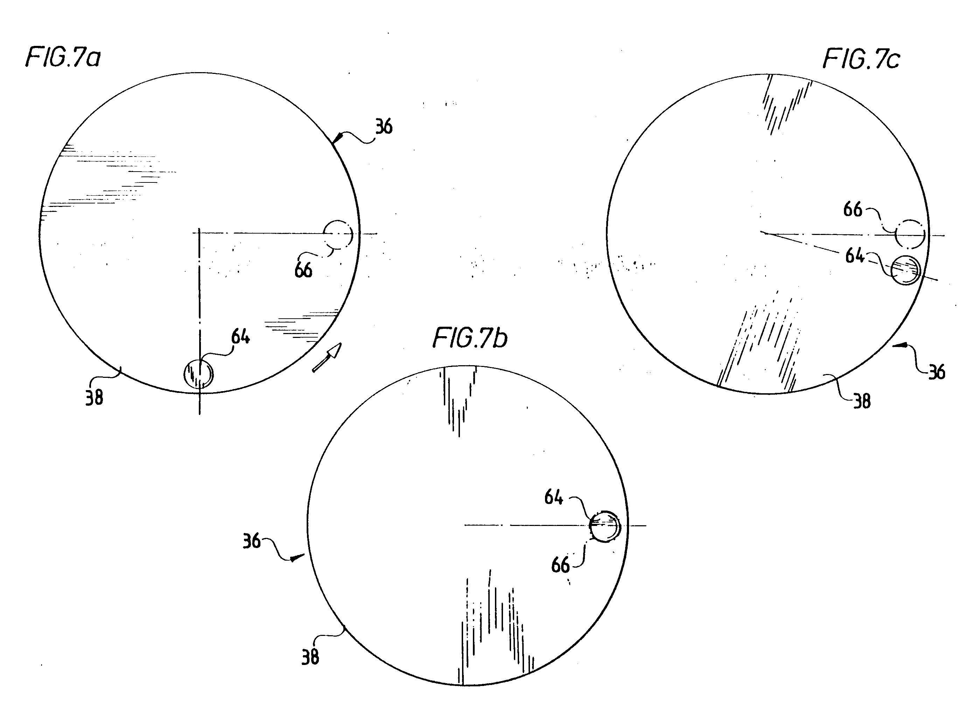

Die Abbildungen 7a, b und c zeigen den Deckel 36 in Draufsicht in den drei verschiedenen Positionen der Figuren 1, 3 beziehungsweise 5. Wie zuvor bereits beschrieben, erreicht der Deckel nach dem Einsetzen die endgültige Schließstellung nach einer 90°-Drehung. Der Magnet 64 bewegt sich dabei von der in Figur 7a dargestellten Position in die Position entsprechend der Figur 7b. Die Prüfvorrichtung 66 beziehungsweise das Reed-Relais wird dabei so angeordnet, daß ein Freigabesignal durch eine Änderung der Schaltstellung des Relais erst dann erzeugt wird, wenn der Deckel 36 in die korrekte Schließposition, wie sie in den Figuren 3, 4 und 7b dargestellt ist, einrückt.

Die in Figur 7c dargestellte Deckelstellung entspricht einer Verdrehung des Deckels von etwa 15° aus der Schließstellung heraus, wobei im Falle daß das Filtergehäuse 10 noch unter Druck steht, der Deckel 36 mit seinen Führungsbolzen 44 in die Raststellung der Führungsnuten 46 einrastet. Für die Kombination der Sicherheitsmerkmale Geber / Prüfvorrichtung und Raststellung des Deckels ist es wichtig, daß der Schaltweg der Geber / Prüfvorrichtungs-Kombination so gewählt ist, daß bei einer Verdrehung des Deckels 36 in die Rastposition bereits kein Freigabesignal mehr durch den Geber 64 erzeugt wird. Dementsprechend ist in einer Anordnung gemäß Figur 7c der Schaltweg des Reed-Relais so bemessen, daß der Magnet 64 das Reed-Relais 66 bereits nicht mehr in dem Schaltzustand hält, in dem ein Freigabesignal erzeugt wird.

Der erfindungsgemäße Sicherheitsverschluß für ein Filtergehäuse funktioniert nun in einer Druckfilteranlage in der Weise, daß der im Deckel 36 untergebrachte Magnet, der auf ein im oder am Gehäuse befindliches Reed-Relais arbeitet, erst nach einem Überfahren der Ausnehmungen 62 in der Führungsnuten 46 das Reed-Relais schaltet und damit ein Freigabesignal für die Filteranlage, insbesondere die Druckpumpe, erzeugt. Beim Versuch, das Filtergehäuse zu öffnen, solange die Druckpumpe läuft, läßt sich zwar der Deckel aus der korrekten Schließstellung herausdrehen, dabei wird jedoch die Pumpe über das Reed-Relais ausgeschaltet. Ein Arbeiten der Druckpumpe ist somit in jedem Fall ausgeschlossen, wenn sich kein Deckel 36 in der korrekten Schließstellung in der Gehäuseöffnung 12 befindet. Der nach dem Abschalten der Druckpumpe noch vorhandene Innendruck drückt den Deckel 36 mit seinen Führungsbolzen 44 in die Ausnehmungen 62 der Führungsnut 46 und verhindert, daß der Deckel 36 vollends geöffnet werden kann. Da die Ausnehmung 62 vorzugsweise in dem steigungsfreien Endbereich der Führungsnut 46 angebracht wird, ist sichergestellt, daß die Abdichtung des Filtergehäuses 10 selbst in dieser Raststellung voll erhalten bleibt.

Es sei hier noch einmal betont, da eine Konstruktion, bei der die Führungsbolzen 44 an der Gehäuseöffnung 12 und die Führungsnuten 46 am Deckel 36 angebracht sind, völlig gleichwertig ist mit der zuvor beschriebenen Bauweise. Die Raststellung des Deckels bei einem unter Druck stehenden Gehäuse wird in diesem Fall dadurch erreicht, da die Ausnehmungen 62 in den Führungsnuten 46 in Richtung zum unteren Ende des Deckels hin abweichend angeordnet sind (siehe die strichpunktierte Darstellung in Figur 6).

## Patentansprüche

1. Sicherheitsverschluß für Filtergehäuse, insbesondere in Druckfilteranlagen, mit einem eine Gehäuseöffnung abdichtenden Deckel, **dadurch gekennzeichnet,**

   daß am Deckel (36) zur Erzeugung eines Freigabesignales für die Filteranlage ein von einer Prüfvorrichtung (66) in der Schließstellung des Deckels (36) detektierbares Geberelement (64) angeordnet ist,

   daß der Deckel (36) an Führungsnuten (46) oder -bolzen der Gehäuseöffnung (12) angepaßte Führungsbolzen (44) bzw. -nuten aufweist,

   und daß die Führungsnuten (46) Ausnehmungen (62) aufweisen, in die die Führungsbolzen (44) bei einer Drehung des Deckels (36) aus der Schließstellung heraus bei unter Überdruck stehendem Filtergehäuse (12) einrasten.

2. Verschluß nach Anspruch 1, dadurch gekennzeichnet, daß die durch die Ausnehmungen (62) definierte Raststellung der Führungsbolzen (44) nur bei drucklosem Filtergehäuse (10) überwindbar ist.

3. Verschluß nach einem der Ansprüche 1 oder 2, dadurch gekennzeichnet, daß die Führungsnuten (46) im Verlauf einen steileren und einen flacher steigenden Teil (56, 58) aufweisen.

4. Verschluß nach Anspruch 3, dadurch gekennzeichnet, daß die Führungsnuten (46) einen steigungsfreien Teil (60) aufweisen, in dessen Verlauf die Schließstellung des Deckels (36) erreichbar ist.

5. Verschluß nach Anspruch 4, dadurch gekennzeichnet, daß die Ausnehmungen (62) im steigungsfreien Teil (60) der Führungsnuten (46) angeordnet sind.

6. Verschluß nach einem der voranstehenden Ansprüche, dadurch gekennzeichnet, daß das Freigabesignal für die Filteranlage in der Raststellung des Deckels (36) durch das Geberelement (64) nicht mehr erzeugbar ist.

7. Verschluß nach einem der voranstehenden Ansprüche, dadurch gekennzeichnet, daß das Geberelement (64) ein Signalgeber für einen berührungslosen Näherungsschalter ist.

8. Verschluß nach Anspruch 7, dadurch gekennzeichnet, daß der Signalgeber (64) ein optischer, magnetischer oder induktiver Signalgeber ist.

9. Druckfilteranlage mit einem oder mehreren Sicherheitsverschlüssen gemäß einem der Ansprüche 1 bis 8.

## Claims

1. Safety lock for a filter housing, particularly in pressure filtration plants, with a cover sealing a housing opening, characterized in that for generating a release signal for the filtration plant on the cover (36) is provided a generator element (64) detectable by a checking device (66) in the closed position of the cover (36), that the cover (36) has guide bolts (44) or grooves adapted to the guide grooves (46) or bolts of the housing opening (12) and that the guide grooves (46) have recesses (62) in which lock the guide bolts (44) during a rotation of the cover (36) out of the closed position in the case of a filter housing (12) under an overpressure.

2. Lock according to claim 1, characterized in that the locking position of the guide bolts (44) defined by the recesses (62) can only be overcome when the filter housing (10) is pressureless

3. Lock according to one of the claims 1 or 2, characterized in that the guide grooves (46) have a steeper part and a less steep part (56, 58).

4. Lock according to claim 3, characterized in that the guide grooves (46) have a slope-free part (60), in whose path the closed position of the cover (36) can be reached.

5. Lock according to claim 4, characterized in that the recesses (62) are located in the slope-free part (60) of the guide grooves (46).

6. Lock according to one of the preceding claims, characterized in that the release signal for the filtration plant can no longer be generated by the generator element (64) when the cover (36) is in the locked position.

7. Lock according to one of the preceding claims, characterized in that the generator element (64) is a signal generator for a contactless proximity switch.

8. Lock according to claim 7, characterized in that the signal generator (64) is an optical, magnetic or inductive signal generator.

9. Pressure filtration plant with one or more safety locks according to one of the claims 1 to 8.

**Revendications**

1. Fermeture de sécurité pour récipient de filtration, notamment dans des installations de filtration sous pression, la fermeture comportant un couvercle qui obture hermétiquement l'embouchure du récipient, et étant caractérisée en ce que

un élément capteur (64), destiné à délivrer à l'installation de filtration un signal de déblocage et pouvant être détecté par un dispositif vérificateur (66) quand le couvercle (36) occupe sa position de fermeture, est disposé sur ce couvercle ;

le couvercle (36) comporte des boutons (44) ou des gorges (46) de guidage adaptés à des gorges (46) de guidage [ou à des boutons (44)] de l'embouchure (12) du récipient ; et

ces gorges (46) de guidage comportent des encoches (62), dans lesquelles les boutons (44) s'encastrent lorsque le couvercle (36) est écarté par rotation de sa position de fermeture alors que le récipient (10) de filtration est encore sous pression.

2. Fermeture selon la revendication 1, caractérisée en ce qu'il n'est possible de sortir les boutons (44) de leur position d'encastrement, déterminée par les encoches (62), que lorsque le récipient (10) n'est pas sous pression.

3. Fermeture selon l'une des revendications 1 et 2,, caractérisée en ce que les gorges (46) de guidage présentent sur leur longueur une partie (56) à pente raide et une partie (58) à pente plus faible.

4. Fermeture selon la revendication 3, caractérisée en ce que les gorges (46) de guidage comportent une partie (60) sans déclivité, sur la longueur de laquelle la position de fermeture du couvercle (36) peut être atteinte.

5. Fermeture selon la revendication 4, caractérisée en ce que les encoches (62) sont formées dans la partie (60) sans déclivité des gorges (46) de guidage.

6. Fermeture selon l'une des revendications précédentes, caractérisée en ce que le signal de déblocage de l'installation de filtration ne peut plus être émis par l'entremise de l'élément capteur (64) lorsque le couvercle (36) occupe sa position de verrouillage.

7. Fermeture selon l'une des revendications précédentes, caractérisée en ce que l'élément capteur (64) est un générateur de signaux, pilotant un interrupteur de proximité qui agit sans contact matériel.

8. Fermeture selon la revendication 7, caractérisée en ce que le générateur (64) de signaux est un générateur de signaux optiques, magnétiques ou inductifs.

9. Installation de filtration sous pression, équipée d'une ou plusieurs fermetures de sécurité selon les revendications 1 à 8.

FIG.1

FIG.2

FIG.3

FIG.4

# FIG.5

# FIG.6

EP 0 313 677 B1

FIG.7a

FIG.7b

FIG.7c